# EUROPEAN PATENT APPLICATION

(11) **EP 4 746 127 A1**
(43) Date of publication of application: **20.05.2026**
(21) Application number: 25802576.6
(22) Date of filing: 10.03.2025
(51) Int. Cl.: H01M 10/613

(54) **STRUCTURE INTEGRATING HEATING SYSTEM AND COOLING SYSTEM, AND BATTERY THERMAL MANAGEMENT SYSTEM**

(30) Priority: 27.12.2024 CN 202423260021 U
(71) Applicant: Eve Energy Co., Ltd., Huizhou, Guangdong 516006 (CN)
(72) Inventor: SHI, Lin, Huizhou, Guangdong 516006 (CN); ZHAO, Yuhang, Huizhou, Guangdong 516006 (CN); LI, Daolin, Huizhou, Guangdong 516006 (CN); YAN, Shiwei, Huizhou, Guangdong 516006 (CN)
(74) Representative: HGF
(86) International application number: PCT/CN2025/081623
(87) International publication number: WO 2025/236827

(57) **Abstract**

Provided are a heating and cooling system integration structure and a battery thermal management system. The heating and cooling system integration structure includes a refrigeration substrate (1), a first insulating film (2), a heating core (3), and a second insulating film (4), where the first insulating film (2) is bonded to the refrigeration substrate (1), the heating core (3) is bonded to the first insulating film (2), and the second insulating film (4) covers the heating core (3).

## Description

This application claims priority to Chinese Patent Application No. 202423260021.5 filed with the China National Intellectual Property Administration on Dec. 27, 2024, the disclosure of which is incorporated herein by reference in its entirety.

### TECHNICAL FIELD

The present application relates to the field of power battery technologies, specifically a heating and cooling system integration structure and a battery thermal management system including the heating and cooling system integration structure.

### BACKGROUND

Pure electric vehicles and hybrid electric vehicles are appearing more and more frequently in our lives. Most existing and future pure electric and hybrid electric vehicles use lithium-ion power batteries as their power source. However, the performance, reliability, and lifespan of lithium-ion batteries significantly decrease under high and low temperatures compared to normal temperatures.

### TECHNICAL PROBLEM

When a battery module is used in a low-temperature environment, a heating system is required to heat the battery module to make the battery cell reach a suitable temperature before charging and discharging. Power batteries are highly sensitive to temperature. A too high temperature easily causes poor consistency of the battery pack module, shortened lifespan, and reduced service life of the motor and the electronic control unit and, in more severe cases, easily triggers thermal runaway of the battery, leading to explosions. Therefore, it is required to combine the heating system with a liquid cooling system to manage the thermal conditions of the battery.

In the related art, a heating film is fixed to the surface of a battery cell mainly by a thermal conductive adhesive or a fastener and fixed to the surface of a liquid cooling system by bonding or hot pressing. Before the heating film is fixed to the liquid cooling system, the surface of the liquid cooling system is required to be insulated, resulting in multiple layers of insulation or adhesive between the liquid cooling system and the heating film. This bonding method is costly and involves multiple heat transfer media, thereby reducing the heat transfer efficiency.

### TECHNICAL SOLUTION

According to a first aspect, embodiments of the present application provide a heating and cooling system integration structure. The heating and cooling system integration structure includes a refrigeration substrate, a heating core and a second insulating film. The first insulating film is bonded to the refrigeration substrate. The heating core is bonded to the first insulating film. The second insulating film covers the heating core.

According to a second aspect, embodiments of the present application provide a battery thermal management system. The battery thermal management system includes a battery module and the heating and cooling system integration structure. The second insulating film is in contact with the battery module.

### BENEFICIAL EFFECTS

In the present application, only a single insulating film is disposed between the heating core and the refrigeration substrate. Compared to the related art, fewer heat transfer media exist between the heating core and the refrigeration substrate, enabling higher heat transfer efficiency.

### BRIEF DESCRIPTION OF THE DRAWINGS

FIG. 1 is a section view of a first insulating film bonded to a refrigeration substrate according to embodiments of the present application.
FIG. 2 is a section view of a heating core bonded to a first insulating film according to embodiments of the present application.
FIG. 3 is a section view of a heating and cooling system integration structure according to embodiments of the present application.

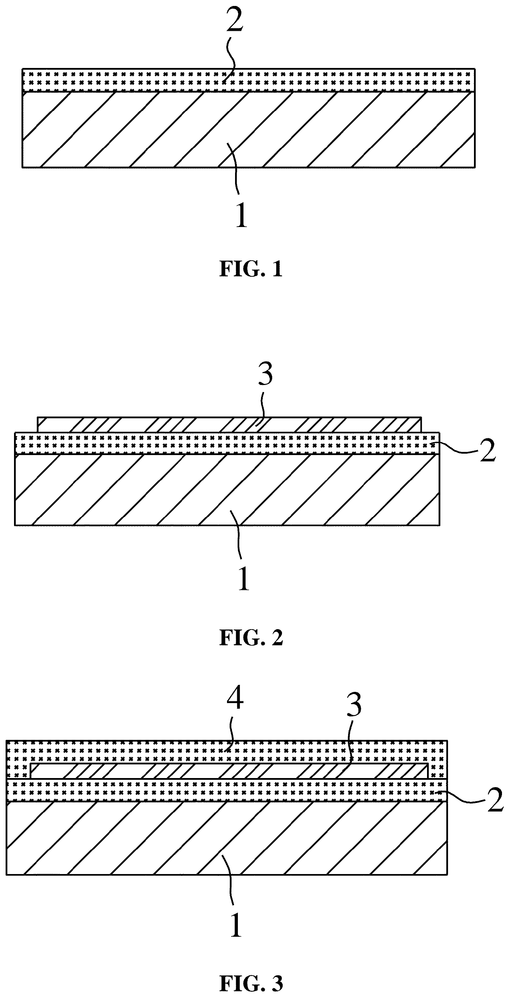

In FIG. 1 to FIG. 3:
1. refrigeration substrate; 2. first insulating film; 3. heating core; 4. second insulating film

### DETAILED DESCRIPTION

This embodiment provides a heating and cooling system integration method including the following steps:

In S10, a refrigeration substrate 1 and a solution for preparing an insulating film are provided, the solution is coated onto the surface of the refrigeration substrate 1, and the solution is cured to be bonded to the refrigeration substrate 1 to form a first insulating film 2. See FIG. 1.

In S20, a heating core 3 is provided and bonded to the first insulating film 2. See FIG. 2.

In S30, the solution is coated onto the surface of the heating core 3 and the surface of the first insulating film 2 exposed from the heating core 3, and the solution is cured to be bonded to the surface of the heating core 3 and the surface of the first insulating film 2 to form a second insulating film 4, thereby forming a heating and cooling system integration structure as shown in FIG. 3.

In a conventional preparation method, first a temporary carrier substrate is provided. After a solution is coated onto the carrier substrate and cured, a heating core is encapsulated onto the carrier substrate by a second insulating film. The carrier substrate is then removed. The heating core encapsulation structure is fixed to a refrigeration substrate coated with an insulating layer through adhesive. This process is complicated. Multiple layers of insulating materials and structural adhesives exist between the heating core encapsulation structure and the refrigeration substrate. The numerous heat transfer media between the refrigeration substrate and the heating core result in low heat transfer efficiency. In this embodiment, the refrigeration substrate 1 is used as a carrier substrate, the first insulating film 2 is formed on the refrigeration substrate 1, and the heating core 3 is fixed to the refrigeration substrate 1 through the second insulating film 4. Compared with the related art, in this embodiment, the first insulating film 2 is directly formed on the refrigeration substrate 1, eliminating the step of removing the carrier substrate and avoiding the need for separate insulation treatment of the refrigeration substrate 1. In addition, no adhesive is required between the first insulating film 2 and the refrigeration substrate 1, resulting in a simple process and high production efficiency. In the obtained heating and cooling system integration structure, only a single insulating film exists between the refrigeration substrate 1 and the heating core 3, thereby reducing the heat transfer media and effectively improving the heat transfer efficiency between the refrigeration substrate 1 and the heating core 3. The heating and cooling system integration structure of this embodiment is applied to a battery thermal management system, enabling rapid adjustment of the battery temperature and improving the efficiency of battery thermal management.

S20 includes providing a core plate that can be heated after being energized, bonding the core plate to the first insulating film 2, and etching the core plate to form a patterned conductive line, that is, the heating core 3.

The core plate may be a conductive metal plate, a graphite plate, or a metal-graphite composite plate. The metal may be silver, copper, or an alloy thereof.

The solution in steps S10 and S30 is coated, dried, and cured to form an insulating film. This insulating film is a polyimide (PI) film with excellent thermal conductivity, so the insulating film is also referred to as a heating film. The composition of the solution of the PI film is known in the art and thus is not described here.

As shown in FIG. 3, the heating and cooling system integration structure of this embodiment includes a refrigeration substrate 1, a first insulating film 2 bonded to the refrigeration substrate 1, a heating core 3 bonded to the first insulating film 2, and a second insulating film 4 covering the heating core 3.

In this embodiment, the refrigeration substrate 1, as a cooling system, is configured to reduce the temperature of the battery at high temperature. In this embodiment, only a single insulating film is disposed between the heating core 3 and the refrigeration substrate 1. Compared to the related art, fewer heat transfer media exist between the heating core 3 and the refrigeration substrate 1, enabling higher heat transfer efficiency.

The first insulating film 2 is partially exposed from the heating core 3. The second insulating film 4 covers the heating core 3 and the first insulating film 2 exposed from the heating core 3. The second insulating film 4 wraps the heating core 3 on the first insulating film 2, achieving an excellent sealing effect and effectively isolating the heating core 3 from the refrigeration substrate 1.

The heating core 3 is a patterned conductive line. After energized, the conductive line heats the battery.

In some embodiments, the heating core 3 is any one of a patterned metal line, a patterned graphite line, or a patterned metal-graphite composite line that has a good heating effect after being energized.

In this embodiment, the first insulating film 2 and the second insulating film 4 are each a PI film. After coated onto the refrigeration substrate 1, a corresponding PI film solution is dried and cured to be stably bonded to the refrigeration substrate 1 to form the first insulating film 2; the heating core 3 is bonded to the first insulating film 2; the PI film solution is coated onto the surface of the heating core 3 and the first insulating film 2; after dried and cured, the PI film solution forms the second insulating film 4 on the surface of the heating core 3 and the surface of the exposed first insulating film 2. In this manner, the heating core 3 is fixed to the refrigeration substrate 1.

The refrigeration substrate 1 has a passage through which a refrigerant flows. The refrigerant is introduced into the passage so that the refrigeration substrate 1 can exchange heat with the heating core 3 so that the temperature of the battery can be adjusted.

In some embodiments, the refrigeration substrate 1 may be any structure having a refrigeration effect, for example, a liquid cooling plate, a direct cooling plate, a liquid cooling pipe, a direct cooling pipe, or a refrigerant pipe.

An embodiment provides a battery thermal management system. The battery thermal management system includes a battery and the heating and cooling system integration structure of any previous embodiment. The second insulating film 4 of the heating and cooling system integration structure is in contact with the battery.

In this embodiment, only the first insulating film 2 serves as the heat transfer medium between the refrigeration substrate 1 and the heating core 3, minimizing the number of heat transfer media and effectively improving the thermal management efficiency of the battery.

The second insulating film 4 is in contact with and fixed to the battery by an adhesive.

## Claims

1. A heating and cooling system integration structure, comprising: a refrigeration substrate, a first insulating film, a heating core and a second insulating film, wherein the first insulating film is bonded to the refrigeration substrate, the heating core is bonded to the first insulating film, and the second insulating film covers the heating core.

2. The heating and cooling system integration structure of claim 1, wherein the first insulating film is partially exposed from the heating core, and the second insulating film covers the heating core and the first insulating film exposed from the heating core.

3. The heating and cooling system integration structure of claim 1, wherein the heating core is a patterned conductive line.

4. The heating and cooling system integration structure of claim 1, wherein the heating core is a patterned metal line.

5. The heating and cooling system integration structure of claim 1, wherein the heating core is a patterned metal-graphite composite line.

6. The heating and cooling system integration structure of claim 1, wherein the heating core is a patterned graphite line.

7. The heating and cooling system integration structure of claim 1, wherein the first insulating film and the second insulating film are each a polyimide (PI) film.

8. The heating and cooling system integration structure of any one of claims 1 to 7, wherein the refrigeration substrate has a passage through which a refrigerant flows.

9. The heating and cooling system integration structure of any one of claims 1 to 7, wherein the refrigeration substrate comprises any one of a liquid cooling plate, a direct cooling plate, a liquid cooling pipe, a direct cooling pipe, or a refrigerant pipe.

10. A battery thermal management system, comprising: a battery module and the heating and cooling system integration structure of any one of claims 1 to 9, wherein the second insulating film is in contact with the battery module.
